# EUROPÄISCHE PATENTSCHRIFT

(11) **EP 3 124 945 B1**
(45) Veröffentlichungstag und Bekanntmachung des Hinweises auf die Patenterteilung: **12.09.2018**
(21) Anmeldenummer: 16178286.7
(22) Anmeldetag: 07.07.2016
(51) Int. Cl.: G01L 19/14, G01L 19/00, G01L 19/06, G01L 23/10

(54) **PIEZOELEKTRISCHER DRUCKSENSOR**
PIEZOELECTRIC PRESSURE SENSOR
CAPTEUR DE PRESSION PIEZOÉLECTRIQUE

(30) Priorität: 31.07.2015 EP 15179398
(43) Veröffentlichungstag der Anmeldung: 01.02.2017
(73) Patentinhaber: Kistler Holding AG, 8408 Winterthur (CH)
(72) Erfinder: Buck, Reinhold, 8308 Illnau (CH); Giger, Martin, 8400 Winterthur (CH)

(56) Entgegenhaltungen:
- WO-A1-2013/147260
- WO-A2-2009/067833
- DE-A1- 3 423 711
- GB-A- 2 022 261
- JP-A- 2015 052 504
- US-A1- 2007 277 618

## Beschreibung

### Technisches Gebiet

Die Erfindung betrifft einen piezoelektrischen Drucksensor nach dem Oberbegriff des unabhängigen Anspruchs.

### Stand der Technik

Piezoelektrische Drucksensoren sind bekannt und werden vielfältig eingesetzt. So wird mit ihnen bei der Druckindizierung von Verbrennungsmotoren ein in einer Druckkammer herrschender Zylinderdruck in Abhängigkeit einer Kurbelwellenstellung oder einer Zeit erfasst. Verbrennungsmotoren umfassen Viertaktmotoren und Zweitaktmotoren wie Ottomotoren, Dieselmotoren, Wankelmotoren, usw.. Bei Schiffsdieselmotoren wird mit ihnen eine Langzeitüberwachung eines Zylinderdrucks durchgeführt. Mit piezoelektrischen Drucksensoren werden schnelle Druckverläufe erfasst, die normalerweise im Bereich von 150 bis 250 bar sind, die aber bei Vorentflammung und Motorklopfen Druckspitzen von 400 bar und höher aufweisen. Piezoelektrische Drucksensoren lassen sich aber auch bei der Drucküberwachung in Strahltriebwerken, Gasturbinen, Dampfturbinen, Dampfmaschinen, usw.. einsetzen.

Ein solcher piezoelektrischer Drucksensor ist in der Schrift CH394637A1 offenbart. Der piezoelektrische Drucksensor weist eine Membran auf, die durch eine Bohrung der Druckkammer direkt in die Druckkammer ragt. Ein Rand der Membran ist mit einem Gehäuse des piezoelektrischen Drucksensors verschweisst. Der von der Membran erfasste Druckverlauf wirkt auf einen piezoelektrischen Aufnehmer, der im Gehäuse nahe der Membran angeordnet ist. Der Druckverlauf erzeugt auf dem piezoelektrischen Aufnehmer elektrische Polarisationsladungen, welche über eine Elektrode als Signale abgenommen werden. Die Signale sind proportional zur Grösse des Druckverlaufs. Die Elektrode ist auf dem piezoelektrischen Aufnehmer angeordnet. Über einen elektrischen Leiter werden die Signale von der Elektrode zu einer Buchse für eine Steckverbindung eines Signalkabels zu einer Auswerteeinheit abgeleitet. Die Buchse ist an einer von der Membran abgewandten Seite des Gehäuses angebracht.

Der piezoelektrische Aufnehmer ist über eine Vorspannhülse mechanisch vorgespannt. Konstruktiv wird das durch einen kreissymmetrischen Aufbau des piezoelektrischen Drucksensors bewerkstelligt. Das Gehäuse ist zylinderförmig. Die Membran ist stirnseitig am Gehäuse angebracht, dahinter ist der piezoelektrische Aufnehmer entlang einer Längsachse des Gehäuses angeordnet. Der elektrische Leiter wird zentral durch den piezoelektrischen Aufnehmer und das Gehäuse geführt. Die Vorspannhülse ist bezüglich der Längsachse radial ausserhalb des piezoelektrischen Aufnehmers angeordnet. Ein hinteres Ende der Vorspannhülse ist mit dem Gehäuse verschweisst, ein vorderes Ende der Vorspannhülse ist mit der Membran verschweisst. Die Vorspannanordnung dichtet somit den piezoelektrischen Aufnehmer gegen die Buchse vakuumdicht und druckdicht ab.

Nun kann beim Einsatz des piezoelektrischen Drucksensors die Membran bersten. Heisse Gase aus der Druckkammer gelangen dann zur Vorspannhülse. Die Vorspannhülse ist dünnwandig und mechanisch nicht sehr widerstandsfähig und kann somit rasch unter der Einwirkung der heissen Gase brechen. In der Folge können die heissen Gase zum piezoelektrischen Aufnehmer und zur Buchse gelangen und können diese beschädigen. Bei Beschädigung der Buchse können die heissen Gase aus dem Gehäuse des piezoelektrischen Drucksensors in die Umgebung entweichen. Die heissen Gase sind zündfähig und können mit Umgebungsluft brennen und Schaden verursachen.
WO2013147260A1 beschreibt einen Drucksensor mit einem Gehäuse, einer Membran und einem piezoelektrischen Sensorelement. Eine Vorspannhülse ist in einen Träger eingehängt und spannt das piezoelektrische Sensorelement mechanisch vor. Eine Elektrode leitet auf dem Sensorelement erzeugte Sensorsignale über eine Signalleitung an eine Leiterplatte ab, wo sie von einem Schaltkreis elektrisch verstärkt werden. Auf der Rückseite vom Gehäuse sind Steckkontakte für eine Steckverbindung mit einem Signalkabel angeordnet.
JP2015052504A1 zeigt ebenfalls einen Drucksensor mit einem Gehäuse, einer Membran und einem Sensorelement. Eine Vorspannhülse ist mit einem Vorspannkörper verschweisst und spannt das piezoelektrische Sensorelement mechanisch vor. Eine Elektrode leitet auf dem Sensorelement erzeugte elektrische Ladungen über eine Signalleitung ab. Zwischen Elektrode und Vorspannkörper ist ein Isolationskörper angeordnet, der die Elektrode elektrisch vom Vorspannkörper isoliert.
DE342711A1 bezieht sich auf einen Druckaufnehmer mit einem Gehäuse, einem Druckübertragungselement und piezoelektrischen Messelementen. Eine Vorspannhülse ist über Schweissnähte mit einem Widerlager verbunden. Eine Elektrodenscheibe ist elektrisch mit einem Ladungsableitungsstift verbunden, der wiederum elektrisch mit einem Anschlussstift eines Anschlusssteckers verbunden ist. Zwischen der Elektrodenscheibe und dem Widerlager ist eine Beschleunigungs-Kompensationsscheibe angeordnet, die auf piezoelektrischer Basis arbeitet.

Eine Aufgabe der Erfindung besteht darin, einen piezoelektrischen Drucksensor bereitzustellen, bei dem auch bei Bruch der Membran keine heissen Gase aus dem Gehäuse des piezoelektrischen Drucksensors in die Umgebung entweichen können.

### Darstellung der Erfindung

Diese Aufgabe wird durch die Merkmale des unabhängigen Anspruchs gelöst.

Die Erfindung betrifft einen piezoelektrischen Drucksensor; mit einem Sensorgehäuse in dem eine Membran, ein piezoelektrischer Aufnehmer, ein Ladungsabgriff und eine Vorspannanordnung angeordnet sind; welche Membran einen Druckverlauf erfasst; auf welchem piezoelektrischen Aufnehmer der erfasste Druckverlauf Polarisationsladungen erzeugt; welche Vorspannanordnung einen Vorspannkörper und eine Vorspannhülse aufweist und den piezoelektrischen Aufnehmer mechanisch vorspannt; welcher Ladungsabgriff die Polarisationsladungen abnimmt; und welcher Ladungsabgriff durch einen zweiten Spalt von der Vorspannhülse elektrisch isoliert ist; wobei der Ladungsabgriff auf einer der Membran zugewandten Seite des Vorspannkörpers über einen ersten elektrischen Isolationskörper mechanisch mit dem Vorspannkörper verbunden ist und den zweiten Spalt druckdicht von einer Umgebung trennt; und wobei der Ladungsabgriff stoffschlüssig mit dem ersten elektrischen Isolationskörper verbunden ist.

Bei einem Bersten der Membran können heisse Gase in den zweiten Spalt zwischen dem Ladungsabgriff und der Vorspannhülse gelangen. Die Vorspannanordnung dichtet den piezoelektrischen Aufnehmer gegen eine Buchse für ein Signalkabel der Umgebung druckdicht ab. Da die Vorspannhülse dünnwandig und mechanisch nicht sehr widerstandsfähig ist, kann sie unter der Einwirkung der heissen Gase brechen. In der Folge können heisse Gase zur Buchse gelangen und bei Beschädigung der Buchse können sie in die Umgebung gelangen. Erfindungsgemäss wird der zweite Spalt druckdicht von der Umgebung getrennt, in dem der Ladungsabgriff über einen ersten elektrischen Isolationskörper mit dem Vorspannkörper mechanisch druckdicht verbunden ist. Erfindungsgemäss ist die druckdichte mechanische Verbindung zwischen dem Ladungsabgriff und dem ersten elektrischen Isolationskörper eine stoffschlüssige Verbindung. Vorteilhafterweise ist der Vorspannkörper mit einer Sensorgehäuseanordnung des piezoelektrischen Drucksensors mechanisch verbunden. Vorteilhafterweise ist die druckdichte mechanische Verbindung zwischen dem Vorspannkörper und dem ersten elektrischen Isolationskörper sowie zwischen dem Vorspannkörper und der Sensorgehäuseanordnung auch eine stoffschlüssige Verbindung. Somit ist der Ladungsabgriff direkt oder indirekt nur über mindestens eine stoffschlüssige Verbindung mit der Sensorgehäuseanordnung mechanisch verbunden. Bei einem Bruch der Membran können dann keine heissen Gase in die Umgebung entweichen.

### Kurze Beschreibung der Zeichnungen

Im Folgenden wird die Erfindung beispielhaft unter Beizug der Figuren näher erklärt. Es zeigen
- Fig. 1: einen ersten Schnitt durch einen piezoelektrischen Drucksensor mit Sensoranordnung, Signalkabelanordnung und Auswerteeinheit;
- Fig. 2: einen zweiten Schnitt durch den piezoelektrischen Drucksensor mit Sensoranordnung, Signalkabelanordnung und Auswerteeinheit nach Fig. 1;
- Fig. 3: einen Schnitt durch eine erste Ausführungsform der Sensoranordnung nach Fig. 1 oder 2;
- Fig. 4: einen Schnitt durch eine zweite Ausführungsform der Sensoranordnung nach Fig. 1 oder 2;
- Fig. 5: einen Schnitt durch eine dritte Ausführungsform der Sensoranordnung nach Fig. 1 oder 2;
- Fig. 6: einen Schnitt durch eine vierte Ausführungsform der Sensoranordnung des piezoelektrischen Drucksensors nach Fig. 1 oder 2;
- Fig. 7: einen Schnitt durch einen Teil des piezoelektrischen Drucksensors nach Fig. 1;
- Fig. 8: einen Schnitt durch einen Teil des piezoelektrischen Drucksensors nach Fig. 2;
- Fig. 9: eine Ausschnitt eines Teils des piezoelektrischen Drucksensors nach Fig. 7 und 8;
- Fig. 10: eine Ansicht eines Teils des piezoelektrischen Drucksensors nach Fig. 1, 2, 7 bis 9;
- Fig. 11: eine Ansicht eines Teils des piezoelektrischen Drucksensors nach Fig. 1 bis 10 vor der mechanischen Verbindung der Sensoranordnung mit der Signalkabelanordnung; und
- Fig.12: eine Ansicht des Teils des piezoelektrischen Drucksensors nach Fig. 11 nach der mechanischen Verbindung der Ladungsableitung der Sensoranordnung mit der Signalkabelanordnung.

### Wege zur Ausführung der Erfindung

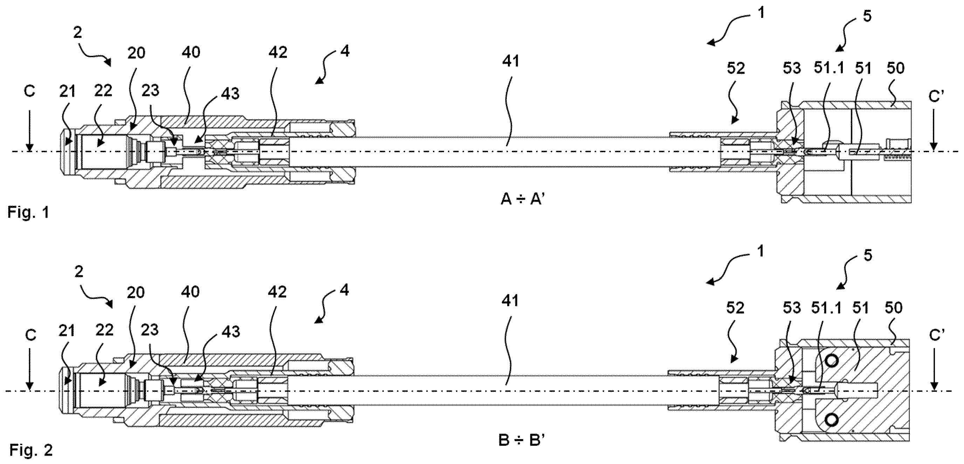

Fig. 1 und 2 zeigen Schnitte durch den erfindungsgemässen piezoelektrischen Drucksensor 1. Die Schnitte sind entlang einer Längsachse CC' des einsatzfertig montierten piezoelektrischen Drucksensors 1 dargestellt. Fig. 1 ist ein Vollschnitt mit einer Vertikalachse AA' des piezoelektrischen Drucksensors 1 als Schnittlinie A÷A'. Fig. 2 ist ein Vollschnitt mit einer Horizontalachse BB' des piezoelektrischen Drucksensors 1 als Schnittlinie B÷B'. Die Vertikalachse AA' und die Horizontalachse BB' stehen senkrecht aufeinander. Der piezoelektrische Drucksensor 1 und seine Bestandteile sind im Querschnitt bezüglich der Längsachse CC' weitgehend kreisförmig. Das Adjektiv "weitgehend" schliesst eine Variation der Kreisform von ±10% ein. Bei Kenntnis der vorliegenden Erfindung kann der piezoelektrische Drucksensor und seine Bestandteile im Querschnitt aber auch rechteckig, vieleckig, usw. sein.

Die Bestandteile des piezoelektrischen Drucksensor 1 können mechanischen miteinander kontaktiert oder mechanisch miteinander verbunden sein. Im Sinne der Erfindung sind bei einem mechanischen Kontakt mehrere Bestandteile lediglich in direkter Berührung miteinander, während bei einer mechanischen Verbindung mehrere Bestandteile stoffschlüssig, kraftschlüssig oder formschlüssig miteinander fixiert sind. Ein mechanischer Kontakt ist also keine mechanische Verbindung. Ein mechanischer Kontakt ist nicht druckdicht. Mit dem Adjektiv "druckdicht" wird eine Festigkeit gegen Druckverläufe ab 10 bar bezeichnet.

Der piezoelektrische Drucksensor 1 weist eine Sensoranordnung 2, eine Signalkabelanordnung 4 und eine Auswerteeinheit 5 auf. Die Sensoranordnung 2 ist entweder über die Signalkabelanordnung 4 mit der Auswerteeinheit 5 elektrisch und mechanisch verbunden, oder sie ist direkt mit der Auswerteeinheit 5 elektrisch und mechanisch verbunden.

Die Sensoranordnung 2 ist in einem vorderen Bereich des piezoelektrischen Drucksensors 1 angeordnet, sie weist eine Membran 21, eine Sensorgehäuseanordnung 20, einen piezoelektrischen Aufnehmer 22 und eine Elektrodenanordnung 23 auf. Der piezoelektrische Drucksensor 1 ist mit einer Wandung einer Druckkammer mechanisch verbunden und die Membran 21 ragt durch eine Bohrung direkt in die Druckkammer. Die mechanische Verbindung erfolgt durch Kraftschluss oder Formschluss. Der vordere Bereich des piezoelektrischen Drucksensors 1 ist im Einsatz des piezoelektrischen Drucksensors 1 nahe der Druckkammer permanent starken Motorvibrationen und hohen Temperaturen ausgesetzt. Die Adjektive "vorderes" und "hinteres" werden für den piezoelektrischen Drucksensor 1 und seine Bestandteile so verwendet, dass mit "vorderes" ein zur Membran 21 hin orientierter Bereich bezeichnet wird, während mit "hinteres" ein von der Membran 21 abgewandter Bereich bezeichnet wird.

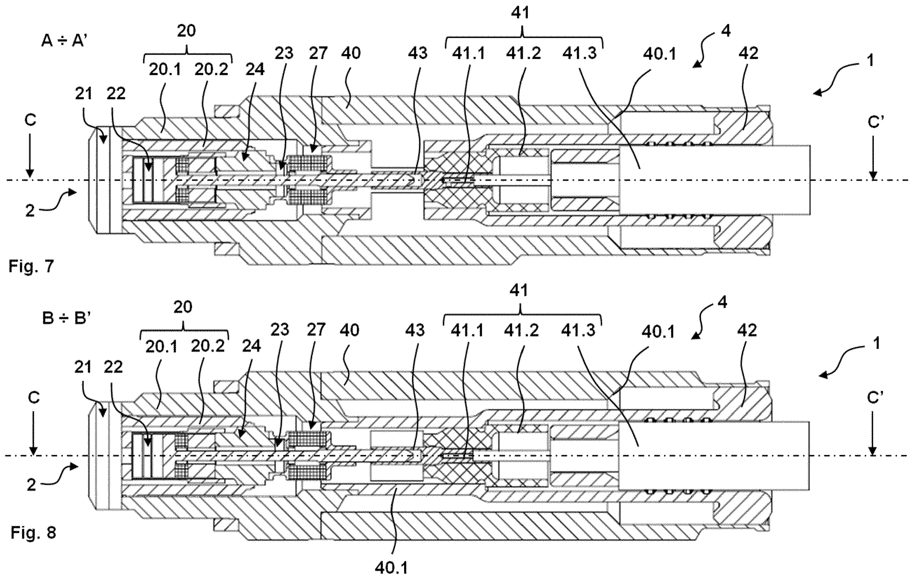

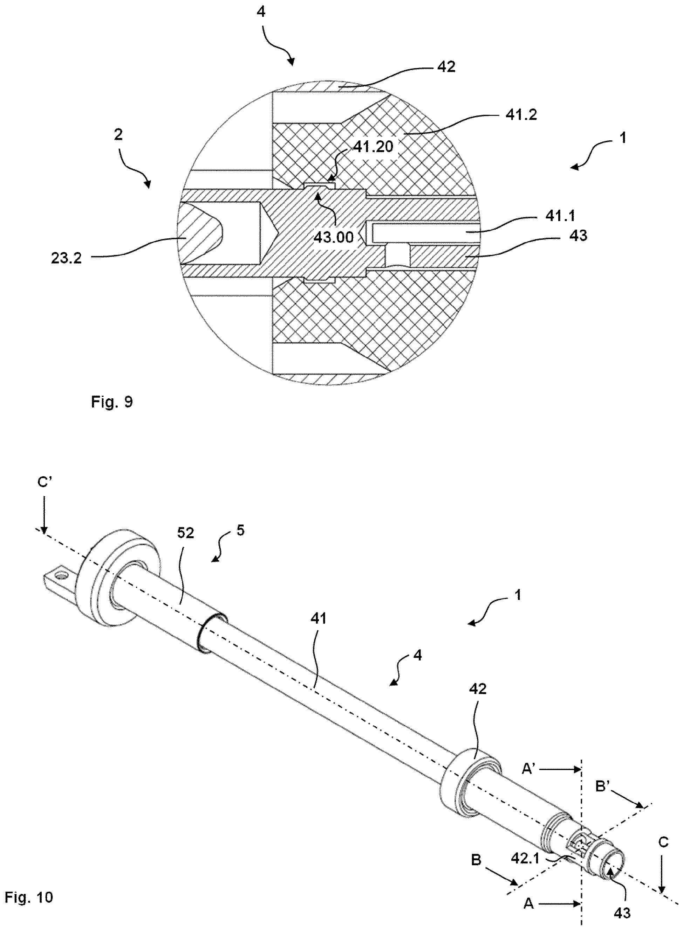

Die Signalkabelanordnung 4 und die Auswerteeinheit 5 sind in einem an den vorderen Bereich anschliessenden Bereich der Umgebung des piezoelektrischen Drucksensors 1 angeordnet. In der Umgebung der Druckkammer herrscht Atmosphärendruck und befinden sich Menschen in Umgebungsluft. Die Signalkabelanordnung 4 weist ein Verbindungselementgehäuse 40, ein Signalkabel 41, einen Stützkörper 42 und ein elektrisches Verbindungselement 43 auf. Weitere Details zur Signalkabelanordnung 4 folgen in der Beschreibung der Fig. 7 bis 12. Die Auswerteeinheit 5 weist eine elektrische Leiterplatte 51 in einem Leiterplattengehäuse 50, einen Stützkörper 52 und ein elektrisches Verbindungselement 53 auf. Weitere Details zur Auswerteeinheit 5 folgen in der Beschreibung der Fig. 9 bis 12.

Die Sensoranordnung 2 weist die Sensorgehäuseanordnung 20 ein Sensorgehäuse 20.1 und ein Versteifungsgehäuse 20.2 auf. Das Versteifungsgehäuse 20.2 verhindert eine Übertragung von mechanischen Verspannungen, die von der mechanischen Verbindung des piezoelektrischen Drucksensors 1 mit der Wandung der Druckkammer herrühren, welche mechanischen Verspannungen über die Sensorgehäuseanordnung 20 auf den piezoelektrischen Aufnehmer 22 gelangen und die Erfassung des Druckverlaufs stören und die Signale verfälschen können. Sensorgehäuse 20.1 und Versteifungsgehäuse 20.2 bestehen aus mechanisch nachgiebigem Material wie aus Reinmetallen, Nickellegierungen, Kobaltlegierungen, Eisenlegierungen, usw. und sind mechanisch miteinander verbunden. Die mechanische Verbindung erfolgt durch Stoffschluss wie Schweissen, Diffusionsschweissen, Thermokompressionsbonden, Löten, usw.. Bei Kenntnis der vorliegenden Erfindung kann der Fachmann die Sensoranordnung auch ohne Versteifungsgehäuse realisieren, so dass die Sensoranordnung nur ein Sensorgehäuse umfasst.

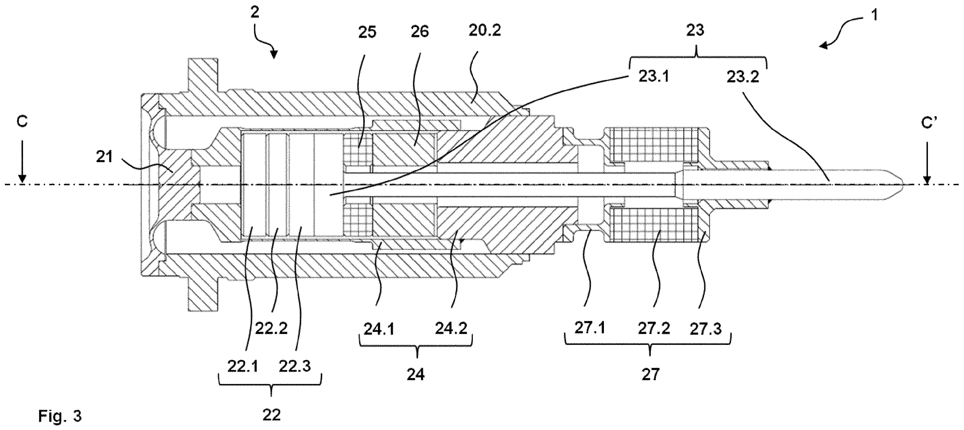

Die Fig. 3 bis 6 zeigen vergrösserte Schnitte durch mehrere Ausführungsformen der Sensoranordnung 2 des piezoelektrischen Drucksensors 1 nach Fig. 1 oder 2. Die stirnseitige Membran 21 besteht aus mechanisch nachgiebigem Material wie aus Reinmetallen, Nickellegierungen, Kobaltlegierungen, Eisenlegierungen, usw.. Ein Rand der Membran 21 ist vollumfänglich mit dem Versteifungsgehäuse 20.2 mechanisch verbunden. Die mechanische Verbindung erfolgt durch Stoffschluss wie Schweissen, Diffusionsschweissen, Thermokompressionsbonden, Löten, usw.. Ein von der Membran 21 erfasster Druckverlauf wirkt als Normalkraft auf den piezoelektrischen Aufnehmer 22. Der piezoelektrische Aufnehmer 22 ist auf der Längsachse CC' direkt hinter der Membran 21 angeordnet.

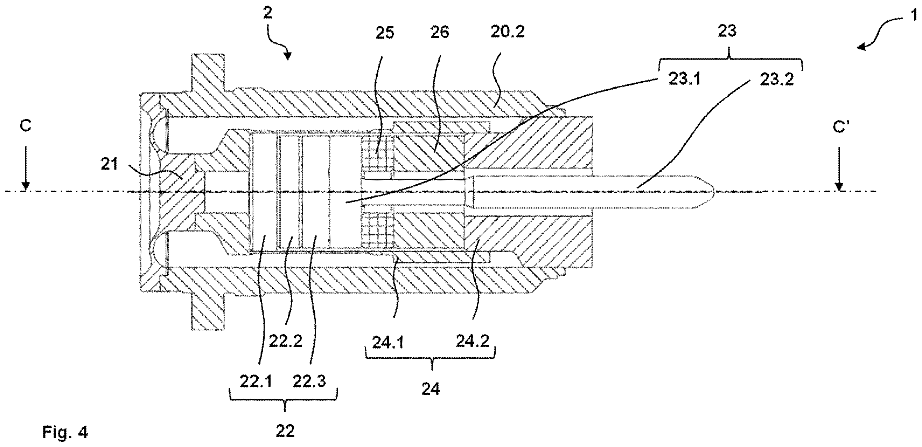

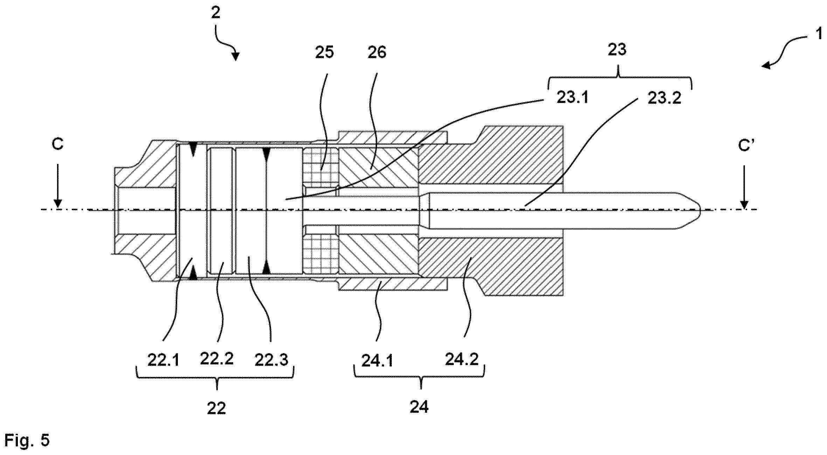

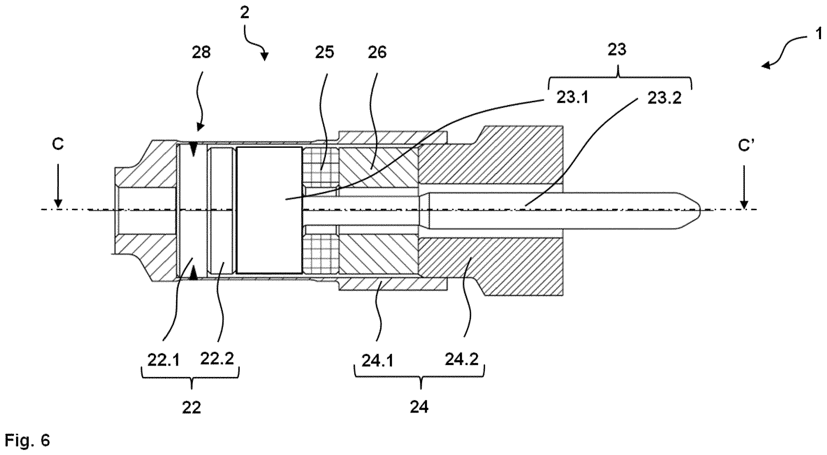

Der piezoelektrische Aufnehmer 22 weist ein erstes Auflageelement 22.1, ein zweites Auflageelement 22.3 und ein piezoelektrisches Aufnehmerelement 22.2 auf. Bezogen auf die Längsachse CC' ist das piezoelektrische Aufnehmerelement 22.2 zwischen dem ersten Auflageelement 22.1 und dem zweiten Auflageelement 22.3 angeordnet. Die Membran 21 ist im flächigen mechanischen Kontakt mit dem ersten Auflageelement 22.1. In den Ausführungsformen einer Sensoranordnung 2 nach Fig. 3 und 4 sind das erste Auflageelement 22.1 und das zweite Auflageelement 22.3 im flächigen mechanischen Kontakt mit dem piezoelektrischen Aufnehmerelement 22.2. In den Ausführungsformen einer Sensoranordnung 2 nach Fig. 5 und 6 sind das erste Auflageelement 22.1 und das zweite Auflageelement 22.3 mechanisch mit dem piezoelektrischen Aufnehmerelement 22.2 verbunden. Die mechanische Verbindung erfolgt durch Stoffschluss wie Schweissen, Diffusionsschweissen, Thermokompressionsbonden, Löten, usw.. Bei Kenntnis der vorliegenden Erfindung kann der Fachmann die Sensoranordnung auch ohne erstes Auflageelement und ohne zweites Auflageelement realisieren, so dass das piezoelektrisches Aufnehmerelement im direkten flächigen mechanischen Kontakt mit der Membran 21 einerseits und der Elektrodenanordnung 23 andererseits ist. Die flächigen mechanischen Kontakte können auch durch mechanische Verbindungen realisiert werden. Die mechanische Verbindungen erfolgen durch Stoffschluss wie Diffusionsschweissen, Thermokompressionsbonden, Löten, usw..

Die Auflageelemente 22.1, 22.3 verteilen die Normalkraftwirkung gleichmässig auf das piezoelektrische Aufnehmerelement 22.2. Die Auflageelemente 22.1, 22.3 sind zylinderförmig und bestehen aus elektrisch leitfähigem und mechanisch steifem Material wie aus Reinmetallen, Nickellegierungen, Kobaltlegierungen, Eisenlegierungen, elektrisch leitender Keramik, Keramik mit elektrisch leitender Beschichtung, usw.. Das piezoelektrische Aufnehmerelement 22.2 ist ebenfalls zylinderförmig und besteht aus piezoelektrischem Kristallmaterial wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw.. Das piezoelektrische Aufnehmerelement 22.2 ist kristallographisch so orientiert geschnitten, dass es eine hohe Empfindlichkeit für den aufzunehmenden Druckverlauf hat. Vorteilhafterweise ist das piezoelektrische Aufnehmerelement 22.2 so orientiert, dass auf den gleichen Oberflächen auf denen die Normalkraft einwirkt, auch negative und positive elektrischer Polarisationsladungen erzeugt werden. Die Normalkraft kann auf die Oberfläche belastend oder entlastend einwirken. Bei mechanischer Belastung durch die Normalkraft werden negative Polarisationsladungen erzeugt; bei mechanischer Entlastung durch die Normalkraft werden positive Polarisationsladungen erzeugt. Die Elektrodenanordnung 23 ist auf der von der Membran 21 abgewandten Seite des piezoelektrischen Aufnehmers 22 auf der Längsachse CC' direkt hinter dem piezoelektrischen Aufnehmer 22 angeordnet. Bei Kenntnis der vorliegenden Erfindung kann der Fachmann natürlich auch mehr als ein piezoelektrisches Aufnehmerelement verwenden.

Die Elektrodenanordnung 23 weist einen zylinderförmigen Ladungsabgriff 23.1 und eine stabförmige Ladungsableitung 23.2 auf. Die Elektrodenanordnung 23 besteht aus elektrisch leitfähigem Material wie aus Reinmetallen, Nickellegierungen, Kobaltlegierungen, Eisenlegierungen, usw.. Ladungsabgriff 23.1 und Ladungsableitung 23.2 können einstückig sein oder mechanisch miteinander verbunden sein. Beliebige mechanische Verbindungen wie Stoffschluss, Formschluss und Kraftschluss sind möglich. Ladungsabgriff 23.1 und Ladungsableitung 23.2 sind elektrisch miteinander verbunden. Negative Polarisationsladungen werden über das zweite Auflageelemente 22.3 von der Elektrodenanordnung 23 als Signale abgenommen und an die Auswerteeinheit 5 abgeleitet. Positive Polarisationsladungen werden über das erste Auflageelemente 22.1 und die Membran 21 vom geerdeten Versteifungsgehäuse 20.2 abgenommen. Bei Kenntnis der vorliegenden Erfindung kann der Fachmann zusätzlich positive Polarisationsladungen als Signale verwenden. So kann der Fachmann die positiven Polarisationsladungen von der Erdung elektrisch isoliert an die Auswerteeinheit ableiten. Dies kann durch eine stoffschlüssige elektrische Verbindung wie Crimpen, usw. der Sensorgehäuseanordnung mit einer Abschirmung des Signalkabels und durch eine elektrische Verbindung wie Crimpen, usw. der elektromagnetischen Abschirmung mit dem Leiterplattengehäuse erfolgen.

Eine vordere Oberfläche des Ladungsabgriffs 23.1 ist derart im flächigen elektrischen Kontakt mit einer ladungsabgebenden hinteren Oberfläche des zweiten Auflageelementes 22.3, das auch bei Normalkrafteinwirkung keine nichtkontaktierte Bereiche mit lokalen hohen elektrischen Spannungen und elektrischen Kriechströmen auftreten. In den Ausführungsformen der Sensoranordnung 2 nach Fig. 3 und 4 ist der flächige elektrische Kontakt von Ladungsabgriff 23.1 und zweitem Auflageelement 22.3 durch einen flächigen mechanischen Kontakt realisiert. In der Ausführungsform der Sensoranordnung 2 nach Fig. 5 ist der flächige elektrische Kontakt von Ladungsabgriff 23.1 und zweitem Auflageelement 22.3 durch eine mechanische Verbindung von Ladungsabgriff 23.1 und zweitem Auflageelement 22.3 realisiert. Die mechanische Verbindung erfolgt durch Stoffschluss wie Schweissen, Diffusionsschweissen, Thermokompressionsbonden, Löten, usw.. In der Ausführungsform der Sensoranordnung 2 nach Fig. 6 ist der flächige elektrische Kontakt von Ladungsabgriff 23.1 und zweitem Auflageelement 22.3 durch einen Ladungsabgriff 23.1 realisiert, der mit dem zweiten Auflageelement 22.3 einstückig hergestellt ist.

Die Elektrodenanordnung 23 ist durch einen ersten elektrischen Isolationskörper 25 gegenüber dem Versteifungsgehäuse 20.2 elektrisch isoliert. Der erste elektrische Isolationskörper 25 ist hohlzylinderförmig und besteht aus elektrisch isolierendem und mechanisch steifem Material wie Keramik, Al₂O₃-Keramik, Saphir, usw.. Der erste elektrische Isolationskörper 25 ist auf der von der Membran 21 abgewandten Seite des Ladungsabgriffs 23.1 auf der Längsachse CC' direkt hinter dem Ladungsabgriff 23.1 angeordnet. In der Ausführungsform der Sensoranordnung 2 nach Fig. 3 ist der erste elektrische Isolationskörper 25 im flächigen mechanischen Kontakt mit dem Ladungsabgriff 23.1. In den Ausführungsformen der Sensoranordnung 2 nach Fig. 4 bis 6 ist der erste elektrische Isolationskörper 25 mechanisch mit dem Ladungsabgriff 23.1 verbunden. Die mechanische Verbindung erfolgt durch Stoffschluss wie Schweissen, Diffusionsschweissen, Thermokompressionsbonden, Löten, usw..

Ein Kompensationselement 26 kompensiert unterschiedliche thermische Ausdehnungskoeffizienten der Bestandteile des piezoelektrischen Drucksensors 1. Das Kompensationselement 26 ist hohlzylinderförmig und besteht aus mechanisch steifem Material wie aus Reinmetallen, Nickellegierungen, Kobaltlegierungen, Eisenlegierungen, Keramiken, Al₂O₃-Keramiken, Saphir, usw.. Das Kompensationselement 26 ist auf der von der Membran 21 abgewandten Seite des ersten elektrischen Isolationskörpers 25 auf der Längsachse CC' direkt hinter dem ersten elektrischen Isolationskörper 25 angeordnet. In der Ausführungsform der Sensoranordnung 2 nach Fig. 3 ist das Kompensationselement 26 im flächigen mechanischen Kontakt mit dem ersten elektrischen Isolationskörper 25. In den Ausführungsformen der Sensoranordnung 2 nach Fig. 4 bis 6 ist das Kompensationselement 26 mechanisch mit dem ersten elektrischen Isolationskörper 25 verbunden. Die mechanische Verbindung erfolgt durch Stoffschluss wie Schweissen, Diffusionsschweissen, Thermokompressionsbonden, Löten, usw.. Das Kompensationselement 26 ist optional und kann auch fehlen. Bei Kenntnis der vorliegenden Erfindung kann der Fachmann einen piezoelektrischen Drucksensor ohne Kompensationselement 26 realisieren, was figürlich nicht dargestellt ist. Das Kompensationselement 26 kann auch zwischen anderen Bestandteilen des piezoelektrischen Drucksensors 1 angeordnet sein, was ebenfalls figürlich nicht dargestellt ist. So kann das Kompensationselement 26 zwischen der Vorspannhülse 24.1 und dem piezoelektrischen Aufnehmer 22 oder zwischen dem piezoelektrischen Aufnehmer 22 und dem Ladungsabgriff 23.1 oder zwischen dem Ladungsabgriff 23.1 und dem ersten elektrischen Isolationskörper 25 oder zwischen dem ersten elektrischen Isolationskörper 25 und dem Vorspannkörper 24.2 angeordnet sein. Dabei kann das Kompensationselement 26 im flächigen mechanischen Kontakt mit diesen Bestandteilen des piezoelektrischen Drucksensors 1 sein.

Der piezoelektrische Aufnehmer 22 ist über eine Vorspannanordnung 24 mechanisch vorgespannt. Die Vorspannanordnung 24 weist einen hohlzylinderförmigen Vorspannkörper 24.2 und eine hohlzylinderförmige Vorspannhülse 24.1 auf. Die Vorspannanordnung 24 besteht aus mechanisch steifem Material wie aus Reinmetallen, Nickellegierungen, Kobaltlegierungen, Eisenlegierungen, usw.. Der piezoelektrische Aufnehmer 22 ist zwischen dem Vorspannkörper 24.2 und der Vorspannhülse 24.1 mechanisch vorgespannt. Der Vorspannkörper 24.2 ist auf der von der Membran 21 abgewandten Seite des Ladungsabgriffs 23.1 angeordnet. Der Vorspannkörper 24.2 ist auf der von der Membran 21 abgewandten Seite des Ladungsabgriffs 23.1 auf der Längsachse CC' direkt hinter dem Kompensationselement 26 angeordnet. Bei fehlendem Kompensationselement 26 ist der Vorspannkörper 24.2 auf der von der Membran 21 abgewandten Seite des Ladungsabgriffs 23.1 auf der Längsachse AA' direkt hinter dem ersten elektrischen Isolationskörper 25 angeordnet. In der Ausführungsform der Sensoranordnung 2 nach Fig. 3 ist das Kompensationselement 26 im flächigen mechanischen Kontakt mit dem Vorspannkörper 24.2. In den Ausführungsformen der Sensoranordnung 2 nach Fig. 4 bis 6 ist das Kompensationselement 26 mechanisch mit dem Vorspannkörper 24.2 verbunden. Die mechanische Verbindung erfolgt durch Stoffschluss wie Schweissen, Diffusionsschweissen, Thermokompressionsbonden, Löten, usw.. Somit sind der Ladungsabgriff 23.1 und der Vorspannkörper 24.2 durch den zwischen ihnen angeordneten ersten elektrischen Isolationskörper 25 gegeneinander elektrisch isoliert.

Ein mittlerer Bereich des Vorspannkörpers 24.2 ist vollumfänglich mit dem Versteifungsgehäuse 20.2 elektrisch und mechanisch verbunden. Eine bezüglich der Längsachse CC' äussere Oberfläche des Vorspannkörpers 24.2 ist mit einer bezüglich der Längsachse CC' inneren Oberfläche des Versteifungsgehäuses 20.2 elektrisch und mechanisch verbunden. Die elektrische und mechanische Verbindung erfolgt vorzugsweise durch Stoffschluss wie Schweissen, Diffusionsschweissen, Thermokompressionsbonden, Löten, usw.. Ein vorderer Rand des Vorspannkörpers 24.2 ist vollumfänglich mit einem hinteren Ende der Vorspannhülse 24.1 mechanisch verbunden. Die mechanische Verbindung erfolgt durch Stoffschluss wie Schweissen, Diffusionsschweissen, Thermokompressionsbonden, Löten, usw.. In den Ausführungsformen einer Sensoranordnung 2 nach Fig. 5 und 6 ist das vordere Ende der Vorspannhülse 24.1 zusätzlich mechanisch mit einer äusseren Oberfläche des ersten Auflageelementes 22.1 verbunden. Die Vorspannhülse 24.1 ist bezüglich der Längsachse CC' radial ausserhalb des piezoelektrischen Aufnehmers 22, des ersten elektrischen Isolationskörpers 25 und des Kompensationselementes 26 angeordnet. Die Vorspannhülse 24.1 ist bezüglich der Längsachse CC' radial innerhalb des Versteifungsgehäuses 20.2 angeordnet. Die Vorspannhülse 24.1 ist durch einen ersten Spalt vom Versteifungsgehäuse 20.2 beabstandet. Die Vorspannhülse 24.1 ist durch einen zweiten Spalt vom piezoelektrischen Aufnehmer 22, dem Ladungsabgriff 23.1, dem ersten elektrischen Isolationskörper 25 und dem Kompensationselement 26 beabstandet. Ein vorderes Ende der Vorspannhülse 24.1 ist vollumfänglich mit einem hinteren Rand der Membran 21 mechanisch verbunden. Die mechanische Verbindung erfolgt durch Stoffschluss wie Schweissen, Diffusionsschweissen, Thermokompressionsbonden, Löten, usw.. Die Vorspannanordnung 24 spannt den piezoelektrischen Aufnehmer 22, den Ladungsabgriff 23.1, den ersten elektrischen Isolationskörper 25 und das Kompensationselement 26 mechanisch vor. Die mechanische Vorspannung ist eine mechanisch kraftschlüssige Verbindung.

In der Ausführungsform der Sensoranordnung 2 nach Fig. 3 ist die Elektrodenanordnung 23 durch eine elektrische Durchführungsanordnung 27 gegenüber dem Versteifungsgehäuse 20.2 elektrisch isoliert. Die Ausführungsformen der Sensoranordnung 2 nach Fig. 4 bis 6 weisen keine solche elektrische Durchführungsanordnung 27 auf. Die elektrische Durchführungsanordnung 27 weist ein erstes Adapterelement 27.1, einen zweiten elektrischen Isolationskörper 27.2 und ein zweites Adapterelement 27.3 auf. Die Durchführungsanordnung 27 ist auf der von der Membran 21 abgewandten Seite des Vorspannkörpers 24.2 auf der Längsachse CC' direkt hinter dem Vorspannkörper 24.2 angeordnet.

Das erste Adapterelement 27.1 ist hohlzylinderförmig und besteht aus mechanisch steifem Material wie aus Reinmetallen, Nickellegierungen, Kobaltlegierungen, Eisenlegierungen, usw.. Das erste Adapterelement 27.1 ist auf der von der Membran 21 abgewandten Seite des Vorspannkörpers 24.2 auf der Längsachse CC' direkt hinter dem Vorspannkörper 24.2 angeordnet. Ein vorderer Rand des ersten Adapterelementes 27.1 ist vollumfänglich mit einem hinteren Ende des Vorspannkörpers 24.2 mechanisch verbunden. Die mechanische Verbindung erfolgt durch Stoffschluss wie Schweissen, Diffusionsschweissen, Thermokompressionsbonden, Löten, usw.. Bei diesem Stoffschluss wird eine Paarung bevorzugt, bei welcher das erste Adapterelement 27.1 aus Titan besteht und bei welcher der Vorspannkörper 24.2 aus einer Eisenlegierung mit der Werkstoffnummer 1.4552 besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 10ppm, vorzugsweise kleiner 5ppm.

Der zweite elektrische Isolationskörper 27.2 isoliert das zweite Adapterelement 27.3 elektrisch gegenüber dem Versteifungsgehäuse 20.2. Der zweite elektrische Isolationskörper 27.2 ist hohlzylinderförmig und besteht aus elektrisch isolierendem und mechanisch steifem Material wie Keramik, Al₂O₃-Keramik, Saphir, usw.. Der zweite elektrische Isolationskörper 27.2 ist auf der von der Membran 21 abgewandten Seite des ersten Adapterelementes 27.1 auf der Längsachse CC' direkt hinter dem ersten Adapterelement 27.1 angeordnet. Ein hinterer Rand des ersten Adapterelementes 27.1 ist vollumfänglich mit einem vorderen Ende des zweiten elektrischen Isolationskörpers 27.2 mechanisch verbunden. Die mechanische Verbindung erfolgt durch Stoffschluss wie Diffusionsschweissen, Thermokompressionsbonden, Löten, usw.. Bei diesem Stoffschluss wird eine Paarung bevorzugt, bei welcher das erste Adapterelement 27.1 aus Titan besteht und bei welcher der zweite elektrische Isolationskörper 27.2 aus Al₂O₃-Keramik besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 5ppm, vorzugsweise kleiner 3ppm.

Die Ladungsableitung 23.2 ist elektrisch und mechanisch mit dem zweiten Adapterelement 27.3 verbunden. Das zweite Adapterelement 27.3 ist hohlzylinderförmig und besteht aus elektrisch leitfähigem Material wie aus Reinmetallen, Nickellegierungen, Kobaltlegierungen, Eisenlegierungen, usw.. Das zweite Adapterelement 27.3 ist auf der von der Membran 21 abgewandten Seite des zweiten elektrischen Isolationskörpers 27.2 auf der Längsachse CC' direkt hinter dem zweiten elektrische Isolationskörper 27.2 angeordnet. Ein vorderes Ende des zweiten Adapterelementes 27.3 ist vollumfänglich mit einem hinteren Ende des zweiten elektrischen Isolationskörpers 27.2 mechanisch verbunden. Die mechanische Verbindung erfolgt durch Stoffschluss wie Diffusionsschweissen, Thermokompressionsbonden, Löten, usw.. Bei diesem Stoffschluss wird eine Paarung bevorzugt, bei welcher das zweite Adapterelement 27.3 aus einer Eisenlegierung mit der Werkstoffnummer 1.3981 oder 1.3982 besteht, und bei welcher der zweite elektrische Isolationskörper 27.2 aus Al₂O₃-Keramik besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 5ppm, vorzugsweise kleiner 3ppm.

Die Ladungsableitung 23.2 erstreckt sich auf der Längsachse CC' zentral durch den ersten elektrischen Isolationskörper 25, das Kompensationselement 26, den Vorspannkörper 24.2 und die elektrische Durchführungsanordnung 27. Die Ladungsableitung 23.2 ist bezüglich der Längsachse CC' radial durch einen dritten Spalt vom ersten elektrischen Isolationskörper 25, vom Kompensationselement 26, vom Vorspannkörper 24.2, vom ersten Adapterelement 27.1 und vom zweiten elektrischen Isolationskörper 27.2 beabstandet. Durch die Beabstandung ist die Ladungsableitung 23.2 von diesen Bestandteilen elektrisch isoliert. Ein hinteres Ende des zweiten Adapterelementes 27.3 ist vollumfänglich mit einem mittleren Bereich der Ladungsableitung 23.2 elektrisch und mechanisch verbunden. Die mechanische Verbindung ist direkt und erfolgt durch Stoffschluss wie Schweissen, Diffusionsschweissen, Thermokompressionsbonden, Löten, usw.. Ein hinteres Ende der Ladungsableitung 23.2 ragt auf der Längsachse CC' aus dem zweiten Adapterelement 27.3 hinaus. Bei Kenntnis der vorliegenden Erfindung hat der Fachmann vielfältige Möglichkeiten der Variation dieser Ausführungsform. So können die Ladungsableitung und das zweite Adapterelement auch einstückig hergestellt sein. In einer solchen Ausführung sind der Ladungsabgriff und die Ladungsableitung aus Montagegründen dann zweiteilig, um die Ladungsableitung so anzuordnen, dass sie sich zentral durch das erste Isolationselement, das Kompensationselement und den Vorspannkörper erstreckt. Auch kann die mechanische Verbindung zwischen der Ladungsableitung und dem zweiten Adapterelement indirekt erfolgen, indem eine Zwischenhülse zwischen der Ladungsableitung und dem zweiten Adapterelement angeordnet ist und stoffschlüssig mit der Ladungsableitung und dem zweiten Adapterelement verbunden wird. Auch bei diesen Stoffschlüssen werden Paarungen von Zwischenhülse mit Ladungsableitung und von Zwischenhülse mit dem zweiten Adapterelement bevorzugt, welche Paarungen geringe Differenzen bei den thermischen Längenausdehnungskoeffizienten hat. Vorzugsweise sind die Differenzen dieser Paarungen kleiner 10ppm, vorzugsweise kleiner 5ppm, vorzugsweise kleiner 3ppm.

Die Elektrodenanordnung 23 stützt sich auf dem mit dem Versteifungsgehäuse 20.2 mechanisch verbundenen Vorspannkörper 24.2 ab.
a. In einem ersten Stützbereich stützt sich der Ladungsabgriff 23.1 über den ersten elektrischen Isolationskörper 25 und das Kompensationselement 26 mechanisch auf dem Vorspannkörper 24.2 ab. In der Ausführungsform der Sensoranordnung 2 nach Fig. 3 sind der Ladungsabgriff 23.1, der erste elektrische Isolationskörper 25, das Kompensationselement 26 und der Vorspannkörper 24.2 mechanisch miteinander kontaktiert. In der Ausführungsform der Sensoranordnung 2 nach Fig. 4 bis 6 sind der Ladungsabgriff 23.1, der erste elektrische Isolationskörper 25, das Kompensationselement 26 und der Vorspannkörper 24.2 mechanisch miteinander verbunden. Mindestens eine mechanische Verbindung des ersten Stützbereiches ist eine stoffschlüssige Verbindung, welche druckdicht ist. Es ist durchaus vorteilhaft, wenn alle mechanischen Verbindungen des ersten Stützbereiches stoffschlüssige Verbindungen sind, die druckdicht sind.
b. In der Ausführungsform der Sensoranordnung 2 nach Fig. 3 stützt sich die Ladungsableitung 23.2 in einem zweiten Stützbereich auf der elektrischen Durchführungsanordnung 27 mechanisch ab, wobei die Ladungsableitung 23.2, die elektrische Durchführungsanordnung 27 und der Vorspannkörper 24.2 mechanisch miteinander verbunden sind. Mindestens eine mechanische Verbindung des zweiten Stützbereiches ist eine stoffschlüssige Verbindung, welche druckdicht ist. Es ist durchaus vorteilhaft, wenn alle mechanischen Verbindungen des zweiten Stützbereiches stoffschlüssige Verbindungen sind, die druckdicht sind.
c. In den Ausführungsformen der Sensoranordnung 2 nach Fig. 3 bis 6 stützt sich der Ladungsabgriff 23.1 in einem dritten Stützbereich über den piezoelektrischen Aufnehmer 22 auf der Vorspannhülse 24.1 mechanisch ab, wobei der Ladungsabgriff 23.1, der piezoelektrische Aufnehmer 22, die Vorspannhülse 24.1 und der Vorspannkörper 24.2 mechanisch miteinander verbunden sind. Mindestens eine mechanische Verbindung des dritten Stützbereiches ist eine stoffschlüssige Verbindung, welche druckdicht ist. Es ist durchaus vorteilhaft, wenn alle mechanischen Verbindungen des dritten Stützbereiches stoffschlüssige Verbindungen sind, die druckdicht sind.
Diese mehrfache mechanische Abstützung in mehreren räumlich auf der Längsachse CC' voneinander beanstandeten Stützbereichen erhöht die mechanische Stabilität der Signalableitung. Dabei ist es vorteilhaft, wenn alle mechanischen Verbindungen der Sensoranordnung 2 stoffschlüssige Verbindungen sind.

Bei einem Bersten der Membran 21 können heisse Gase aus der Druckkammer in den ersten Spalt zwischen der Vorspannhülse 24.1 einerseits und dem Versteifungsgehäuse 20.2 andererseits gelangen. Wenn nun die Vorspannhülse 24.1 durch die heissen Gase beschädigt wird, können die heissen Gase in den zweiten Spalt zwischen der Vorspannhülse 24.1 einerseits und dem piezoelektrischen Aufnehmer 22, dem Ladungsabgriff 23.1, dem ersten elektrischen Isolationskörper 25 und dem Kompensationselement 26 andererseits gelangen. Da die Elektrodenanordnung 23 über die Ladungsableitung 23.2 mechanisch mit der elektrischen Durchführungsanordnung 27 und dem Vorspannkörper 24.2 verbunden ist, dichtet die Elektrodenanordnung 23 den ersten elektrischen Isolationskörper 25 und das Kompensationselement 26 in der Ausführungsform der Sensoranordnung 2 nach Fig. 3 derart ab, dass heisse Gase nur sehr langsam in den dritten Spalt zwischen der Ladungsableitung 23.2 einerseits und dem ersten elektrischen Isolationskörper 25, dem Kompensationselement 26 und dem Vorspannkörper 24.2 andererseits gelangen. Unter dieser Abdichtung wird eine Druckfestigkeit gegenüber dem mittleren indizierten Zylinderdruck des Verbrennungsmotors verstanden. Der mittlere indizierte Zylinderdruck wird auch indizierter Mitteldruck genannt und liegt im Bereich von 1/3 bis 1/8 des Maximums der schnellen Druckverläufe von 150 bis 250 bar. Der mittlere indizierte Zylinderdruck ist der Druck, der sich bei einem Bersten der Membran 21 und bei einer Beschädigung der Vorspannhülse 24.1 im zeitlichen Mittel im zweiten Spalt einstellt. Der flächige mechanische Kontakt zwischen dem Ladungsabgriff 23.1 und dem ersten elektrischen Isolationskörper 25 dichtet den dritten Spalt durch Formschluss vom zweiten Spalt ab. Der flächige mechanische Kontakt zwischen dem ersten elektrischen Isolationskörper 25 und dem Kompensationselement 26 dichtet den dritten Spalt durch Formschluss vom zweiten Spalt ab. Der flächige mechanische Kontakt zwischen dem Kompensationselement 26 und dem Vorspannkörper 24.2 dichtet dritten Spalt durch Formschluss vom zweiten Spalt ab. Bei fehlendem Kompensationselement 26 dichtet die Elektrodenanordnung 23 nur den ersten elektrischen Isolationskörper 25 derart ab, dass heisse Gase nicht in den dritten Spalt gelangen. Der flächige mechanische Kontakt zwischen dem Ladungsabgriff 23.1 und dem ersten elektrischen Isolationskörper 25 dichtet den dritten Spalt durch Formschluss vom zweiten Spalt ab. Der flächige mechanische Kontakt zwischen dem ersten elektrischen Isolationskörper 25 und dem Vorspannkörper 24.2 dichtet den dritten Spalt durch Formschluss vom zweiten Spalt ab. Wenn nun heisse Gase auch den ersten elektrischen Isolationskörper 25 zerstören, so dass dieser in eine Vielzahl kleine Bruchstücke zerbricht und heisse Gase in den dritten Spalt gelangen, so ist der dritte Spalt in der Ausführungsform der Sensoranordnung 2 nach Fig. 3 durch den zweiten Stützbereich druckdicht von der Umgebung getrennt. In den Ausführungsformen der Sensoranordnung 2 nach Fig. 4 bis 6 ist der dritte Spalt durch den ersten Stützbereich druckdicht von der Umgebung getrennt. Somit können bei einem Bruch der Membran keine heissen Gase in die Umgebung entweichen.

Fig. 7 und 8 zeigen einen vergrösserten Schnitt durch einen Teil der Sensoranordnung 2 und der Signalkabelanordnung 4 des einsatzfertig montierten piezoelektrischen Drucksensors 1 nach Fig. 1 oder 2. Fig. 7 ist ein Vollschnitt mit der Vertikalachse AA' des piezoelektrischen Drucksensors 1 als Schnittlinie A÷A'. Fig. 8 ist ein Vollschnitt mit der Horizontalachse BB' des piezoelektrischen Drucksensors 1 als Schnittlinie B÷B'. Fig. 7 und 8 zeigen das Verbindungselementgehäuse 40, das Signalkabel 41, den Stützkörper 42 und das elektrische Verbindungselement 43 der Signalkabelanordnung 4.

Das elektrische Verbindungselement 43 der Signalkabelanordnung 4 ist hohlzylinderförmig. Das elektrische Verbindungselement 43 besteht aus elektrisch leitfähigem Material wie aus Reinmetallen, Nickellegierungen, Kobaltlegierungen, Eisenlegierungen, usw.. Die Ladungsableitung 23.2 ist mit dem elektrischen Verbindungselement 43 zusammengeführt. Das hintere Ende der Ladungsableitung 23.2 ragt auf der Längsachse CC' in das elektrische Verbindungselement 43 hinein. In diesem Bereich sind eine bezüglich der Längsachse CC' äussere Oberfläche der Ladungsableitung 23.2 und eine bezüglich der Längsachse CC' innere Oberfläche des elektrischen Verbindungselementes 43 elektrisch und mechanisch miteinander verbunden. Die elektrische und mechanische Verbindung erfolgt durch Stoffschluss wie Schweissen, Diffusionsschweissen, Thermokompressionsbonden, Löten, Crimpen, usw.. Die Ladungsableitung 23.2 ist bereichsweise im Stoffschluss mit dem elektrischen Verbindungselement 43. Der bereichsweise Stoffschluss kann durch Punktschweissung oder vollumfängliche Linienschweissung erfolgen. Bei Kenntnis der vorliegenden Erfindung kann der Fachmann natürlich auch ein anders geformtes elektrisches Verbindungselement 43 verwenden. So kann das elektrische Verbindungselement 43 plattenförmig oder halbschalenförmig sein. Die Ladungsableitung 23.2 ragt dann nicht in das elektrische Verbindungselement 43 hinein. Für die Herstellung der elektrischen und mechanischen Verbindung wird die Ladungsableitung 23.2 dann auf das plattenförmige oder halbschalenförmige elektrische Verbindungselement 43 gelegt.

Im Stützkörper 42 der Signalkabelanordnung 4 ist ein vorderes Ende des Signalkabels 41 angeordnet. Der Stützkörper 42 ist hohlzylinderförmig und besteht aus mechanisch beständigem Material wie aus Reinmetallen, Nickellegierungen, Kobaltlegierungen, Eisenlegierungen, usw.. Ein hinterer Bereich des Stützkörpers 42 ist vollumfänglich mit einem hinteren Rand des Verbindungselementgehäuses 40 mechanisch verbunden. Die mechanische Verbindung erfolgt durch Stoffschluss wie Schweissen, Diffusionsschweissen, Thermokompressionsbonden, Löten, usw.. Ein vorderer Bereich des Stützkörpers 42 weist einen Stützkörperrahmen 42.1 auf. Der Stützkörperrahmen 42.1 weist mindestens ein Fenster auf. Wie in der Ansicht nach Fig. 10 dargestellt, besteht der Stützkörperrahmen 42.1 aus zwei parallel zur Längsachse CC' orientierte Streben zwischen denen auf der Vertikalachse BB' zwei Fenster liegen. Durch die Fenster ist das elektrische Verbindungselement 43 von aussen zugänglich und mit einem Fügewerkzeug erreichbar. Ein vorderer Rand des Verbindungselementgehäuses 40 ist vollumfänglich mit einem hinteren Rand des Sensorgehäuses 20 mechanisch verbunden. Die mechanische Verbindung erfolgt durch Stoffschluss wie Schweissen, Diffusionsschweissen, Thermokompressionsbonden, Löten, usw..

Das Signalkabel 41 weist einen elektrischen Signalleiter 41.1, ein elektrisches Isolationselement 41.2 und einen Signalkabelmantel 41.3 auf. Eine bezüglich der Längsachse CC' äussere Oberfläche eines vorderen Endes des Signalkabelmantels 41.3 ist mit einer bezüglich der Längsachse CC' inneren Oberfläche des Stützkörpers 42 der Signalkabelanordnung 4 mechanisch verbunden. Beliebige mechanische Verbindungen wie Stoffschluss, Formschluss und Kraftschluss sind möglich, dabei wird ein Crimpen bevorzugt. Der elektrische Signalleiter 41.1 besteht aus elektrisch leitfähigem Material wie aus Reinmetallen, Nickellegierungen, Kobaltlegierungen, Eisenlegierungen, usw.. Ein vorderes Ende des elektrischen Signalleiters 41.1 und ein hinteres Ende des elektrischen Verbindungselementes 43 sind elektrisch und mechanisch miteinander verbunden. Beliebige elektrische und mechanische Verbindungen wie Stoffschluss, Formschluss und Kraftschluss sind möglich. Das elektrische Isolationselement 41.2 ist hohlzylinderförmig und besteht aus thermisch bis zu Temperaturen von mindestens 200°C beständigem, elektrisch isolierendem Material wie Polytetrafluorethylen, Polyimid, Hexafluorpropylenvinylidenfluorid-Copolymer (FKM), usw.. Das elektrische Isolationselement 41.2 umschliesst den Verbindungsbereich zwischen dem elektrischen Verbindungselement 43 und dem elektrischen Signalleiter 41.1 vollumfänglich und es umschliesst den elektrischen Signalleiter 41.1 vollumfänglich. Das elektrische Isolationselement 41.2 isoliert das elektrische Verbindungselement 43 und den elektrischen Signalleiter 41.1 elektrisch gegenüber dem Stützkörper 42. Das elektrische Isolationselement 41.2 dämpft auch Motorvibrationen.

Fig. 9 zeigt einen Ausschnitt der Sensoranordnung 2 und der Signalkabelanordnung 4 des piezoelektrischen Drucksensors 1 nach Fig. 7 oder 8. Das elektrische Verbindungselement 43 weist auf einer äusseren Oberfläche ein erstes Rastierelement 43.00 auf, das beispielsweise als radial vorstehende Nase 43.00 ausgeführt ist. Das elektrische Isolationselement 41.2 weist auf einer inneren Oberfläche ein zweites Rastierelement 41.20 auf, das beispielsweise als Nut 41.20 ausgeführt ist. Das erste Rastierelement 43.00 und das zweite Rastierelement 41.20 bilden einen Form- oder Berührschluss mit Spiel. Der Form- oder Berührschluss wird automatisch beim Einschieben des elektrischen Verbindungselementes 43 in das elektrische Isolationselement 41.2 gebildet. Die Nut verläuft schräg zur Längsachse CC'. Nut und Nase sind zueinander passend ausgeführt, die Nase ragt in die Nut. Das Spiel verhindert die Übertragung von Motorvibrationen vom elektrischen Signalleiter 41.1 auf die Ladungsableitung 23.2, welche übertragenen Motorvibrationen auf das piezoelektrische Aufnehmerelement 22.2 wirken und elektrische Polarisationsladungen erzeugen können, wodurch die Erfassung des Druckverlaufs verfälscht werden kann. Das Spiel ist grösser als 5 µm. Das Spiel ermöglicht kleine Relativbewegungen zwischen dem elektrischen Verbindungselement 43 und dem elektrischen Isolationselement 41.2. Bei Kenntnis der vorliegenden Erfindung kann der Fachmann natürlich andere Ausführungen von Rastierelementen realisieren, so kann das erste Rastierelement eine Nut sein und das zweite Rastierelement kann eine Nase sein.

Der elektrische Signalleiter 41.1 und das elektrische Isolationselement 41.2 erstrecken sich in Längsrichtung CC' parallel zum Signalkabelmantel 41.3. Der Signalkabelmantel 41.3 schützt den elektrischen Signalleiter 41.1 und das elektrische Isolationselement 41.2 vor schädlichen Umwelteinflüssen wie Verunreinigungen (Staub, Feuchtigkeit, usw.). Das Signalkabel 41 kann eine koaxiale elektromagnetische Abschirmung aufweisen und den Signalleiter 41.1 vor elektrischen und elektromagnetischen Störeffekten in Form von elektromagnetischer Strahlung schützen und somit eine elektromagnetische Verträglichkeit des piezoelektrischen Drucksensors 1 ermöglichen. Das Signalkabel 41 kann mehrere Zentimeter lang sein, es kann aber auch mehrere Meter lang sein.

Das Signalkabelanordnung 4 kann aber auch vollständig fehlen, so dass die Sensoranordnung 2 direkt mit der Auswerteeinheit 5 elektrisch und mechanisch verbunden ist. Dann ist die Ladungsableitung 23.2 stoffschlüssig mit dem elektrischen Verbindungselement 53 der Auswerteeinheit 5 verbunden. Das Sensorgehäuse 20.1 ist dann einstückig mit dem Stützkörper 52 der Auswerteeinheit 5. Das Leiterplattengehäuse 50 ist dann anstelle des Verbindungselementgehäuses 40 mechanisch mit dem Sensorgehäuse 20.1 verbunden. Diese Ausführungsform kann dann die Merkmale der Beschreibung zur Fig. 10 aufweisen, so dass der Stützkörper 52 der Auswerteeinheit 5 einen Stützkörperrahmen mit mindestens einem Fenster aufweist, durch welches Fenster das elektrische Verbindungselement von aussen zugänglich und mit einem Fügewerkzeug erreichbar ist. Diese Ausführungsform kann dann auch die Merkmale der Beschreibung zur Fig. 9 aufweisen, wo ein erstes Rastierelement der Stützhülse 52 der Auswerteeinheit 5 mit einem zweiten Rastierelement eines elektrischen Isolationselementes der Auswerteeinheit 5 einen Form- oder Berührschluss mit Spiel bilden kann.

Ein hinteres Ende des Signalkabels 41 ist elektrisch und mechanisch mit der Auswerteinheit 5 verbunden. Dazu weist die Auswerteinheit 5 den Stützkörper 52 auf. Der Stützkörper 52 ist hohlzylinderförmig und besteht aus mechanisch beständigem Material wie Edelstahl, Stahllegierungen, usw.. Wie in Fig. 1 und 2 dargestellt, ist ein hinterer Rand des Stützkörpers 52 vollumfänglich mit einem vorderen Rand des Leiterplattengehäuses 50 mechanisch verbunden. Die mechanische Verbindung erfolgt durch Stoffschluss wie Schweissen, Diffusionsschweissen, Thermokompressionsbonden, Löten, usw.. Eine bezüglich der Längsachse CC' äussere Oberfläche eines hinteren Endes des Signalkabelmantels 41.3 ist mit einer bezüglich der Längsachse CC' inneren Oberfläche des Stützkörpers 52 der Auswerteeinheit 5 bereichsweise mechanisch verbunden. Beliebige mechanische Verbindungen wie Stoffschluss, Formschluss und Kraftschluss sind möglich, dabei wird ein Crimpen bevorzugt. Ein hinteres Ende des elektrischen Signalleiters 41.1 des Signalkabels 41 ist über das elektrische Verbindungselement 53 elektrisch und mechanisch mit dem elektrischen Signalleiter 51.1 der Leiterplatte 51 verbunden. Beliebige elektrische und mechanische Verbindungen wie Stoffschluss, Formschluss und Kraftschluss sind möglich. Das elektrische Verbindungselement 53 und der elektrische Signalleiter 51.1 können einstückig sein. Von der Elektrodenanordnung 23 abgenommene Signale werden über die Ladungsableitung 23.2 zum elektrischen Verbindungselement 43 der Signalkabelanordnung 4 abgeleitet und vom elektrischen Verbindungselement 43 der Signalkabelanordnung 4 über den elektrischen Signalleiter 41.1 des Signalkabels 41 und das elektrische Verbindungselement 53 an den elektrischen Signalleiter 51.1 der Leiterplatte 51 abgeleitet und dort elektrisch verstärkt und ausgewertet. Die Signale sind proportional zur Grösse des von der Membran 21 erfassten Druckverlaufs. Natürlich können die Leiterplatte und der elektrische Signalleiter der Leiterplatte auch Bestandteile der Signalkabelanordnung sein.

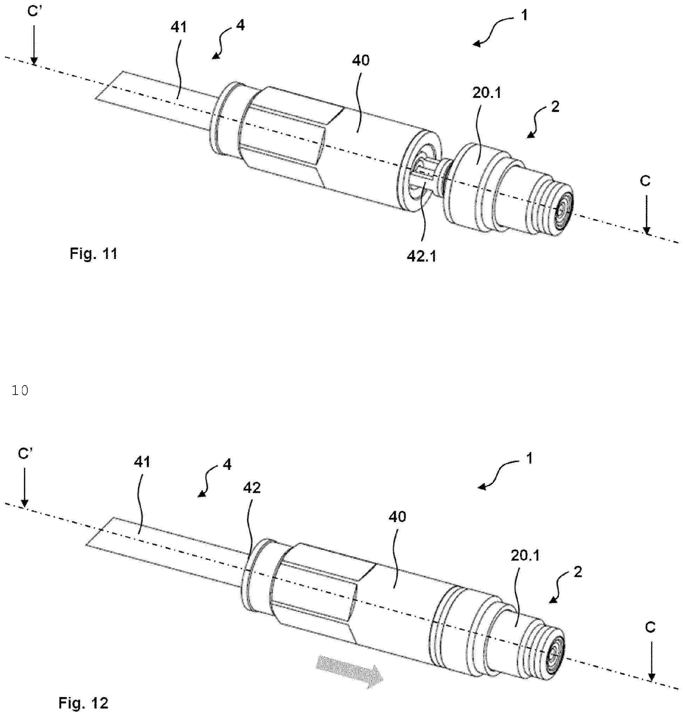

Die Fig. 11 und 12 zeigen Schritte des Verfahrens zur Herstellung des piezoelektrischen Drucksensors 1. Die Ausführungsform der Sensoranordnung 2 nach Fig. 3 und die Signalkabelanordnung 4 werden als separate Halbzeuge hergestellt. Dies hat den Vorteil, dass Varianten der Sensoranordnung 2 mit Varianten der Signalkabelanordnung 4 oder direkt mit der Auswerteeinheit 5 zu einem piezoelektrischen Drucksensors 1 herstellbar sind, wodurch die Herstellung kostengünstig ist. Varianten der Sensoranordnung 2 umfassen Membrane 21 mit verschiedenen Membranstärken, und/oder piezoelektrische Aufnehmer 22 mit verschiedenen Einsatztemperaturbereichen. Varianten der Signalkabelanordnung 4 umfassen Signalkabel 41 mit unterschiedliche Längen und/oder Signalkabel 41 mit oder ohne elektromagnetische Abschirmung und/oder sehr kurze Signalkabel 41. Als weitere Variante kann die Sensoranordnung 2 ohne Signalkabelanordnung 4 direkt mit der Auswerteieinheit 5 mechanisch und elektrisch verbunden sein.

Die Sensoranordnung 2 weist die in der Sensorgehäuseanordnung 20 angeordnete Membran 21, den piezoelektrischen Aufnehmer 22, die Elektrodenanordnung 23, die Vorspannanordnung 24, den ersten elektrischen Isolationskörper 25, das Kompensationselement 26, die elektrische Durchführungsanordnung 27 und das Versteifungsgehäuse 20.2 auf. Die Signalkabelanordnung 4 weist das Verbindungselementgehäuse 40, das Signalkabel 41, den Stützkörper 42 und das elektrische Verbindungselement 43 auf. Im Stützkörper 42 sind das elektrische Verbindungselement 43 und das vordere Ende des Signalkabels 41 angeordnet. Das Verbindungselementgehäuse 40 ist auf der Längsachse CC' über den Stützkörper 42 geschoben und liegt mit einem Verbindungselementgehäuseabsatz 40.1 im mechanischen Kontakt aussenseitig an einem hinteren Ende des Stützkörpers 42 an. In der Ansicht nach Fig. 11 ist der hintere Bereich des Stützkörpers 42 daher vom Verbindungselementgehäuse 40 verdeckt, während der vordere Bereich des Stützkörpers 42 mit dem Stützkörperrahmen 42.1 von aussen sichtbar und zugänglich ist.

In einem ersten Verfahrensschritt wird das hintere Ende der Ladungsableitung 23.2 auf der Längsachse CC' in das elektrische Verbindungselement 43 geschoben, so dass das hintere Ende der Ladungsableitung 23.2 in das elektrische Verbindungselement 43 hineinragt und die bezüglich der Längsachse CC' äussere Oberfläche der Ladungsableitung 23.2 und die bezüglich der Längsachse CC' innere Oberfläche des elektrischen Verbindungselementes 43 bereichsweise im mechanischen Kontakt sind.

In einem weiteren Verfahrensschritt werden die äussere Oberfläche der Ladungsableitung 23.2 und die innere Oberfläche des elektrischen Verbindungselementes 43 bereichsweise elektrisch und mechanisch miteinander verbunden. Die elektrische und mechanische Verbindung erfolgt durch Stoffschluss wie Schweissen, Diffusionsschweissen, Thermokompressionsbonden, Löten, usw.. Dazu stellt ein Fügewerkzeug durch die Fenster des Stützkörperrahmens 42.1 den Stoffschluss zwischen der Ladungsableitung 23.2 und dem elektrischen Verbindungselement 43 her. Das Fügewerkzeug ist in Fig. 11 nicht dargestellt. Das Fügewerkzeug kann aus Elektroden einer elektrischen Widerstandsschweissanlage bestehen, es kann aber auch ein Crimpwerkzeug, ein Laser, usw. sein.

In einem noch weiteren Verfahrensschritt wird das Verbindungselementgehäuse 40 auf der Längsachse CC' gegen das Sensorgehäuse 20 verschoben, so dass wie in Fig. 7 und 8 dargestellt der vordere Rand des Verbindungselementgehäuses 40 mit dem hinteren Rand des Sensorgehäuses 20 im mechanischen Kontakt ist und von aussen zugänglich ist. Dieses Verschieben des Verbindungselementgehäuses 40 ist in Fig. 12 durch einen Pfeil dargestellt. Dadurch ist der hintere Bereich des Stützkörpers 42 wie in Fig. 7 und 8 dargestellt mit dem hinteren Rand des Verbindungselementgehäuse 40 weitgehend bündig und von aussen zugänglich, während nun der vordere Bereich des Stützkörpers 42 mit dem Stützkörperrahmens 42.1 verdeckt ist.

Nun wird in einem weiteren Verfahrensschritt das Verbindungselementgehäuse 40 bereichsweise mit dem Sensorgehäuse 20.1 verbunden. Vorzugsweise wird der vordere Rand des Verbindungselementgehäuses 40 mit dem hinteren Rand des Sensorgehäuses 20.1 vollumfänglich mechanisch miteinander verbunden. Die mechanische Verbindung erfolgt durch Stoffschluss wie Schweissen, Diffusionsschweissen, Thermokompressionsbonden, Löten, usw.. Dazu stellt ein Fügewerkzeug den Stoffschluss zwischen dem vorderen Rand des Verbindungselementgehäuses 40 und dem hinteren Rand des Sensorgehäuses 20.1 her. Das Fügewerkzeug ist in Fig. 12 nicht dargestellt.

Und in noch einem weiteren Verfahrensschritt wird der Stützkörper 42 bereichsweise mit dem Verbindungselementgehäuse 40 mechanisch verbunden. Vorzugsweise wird der hintere Bereich des Stützkörpers 42 vollumfänglich mit dem hinteren Rand des Verbindungselementgehäuses 40 mechanisch verbunden. Die mechanische Verbindung erfolgt durch Stoffschluss wie Schweissen, Diffusionsschweissen, Thermokompressionsbonden, Löten, usw.. Dazu stellt ein Fügewerkzeug dem Stoffschluss zwischen dem hinteren Bereich des Stützkörpers 42 und dem hinteren Rand des Verbindungselementgehäuses 40 her. Das Fügewerkzeug ist in Fig. 12 nicht dargestellt.

Bei Kenntnis der vorliegenden Erfindung kann der Fachmann die verschiedenen Ausführungsformen miteinander kombinieren. So kann er die Ausführungsform der Sensoranordnungen nach Fig. 3 mit derjenigen der Fig. 4 und/oder Fig. 5 o- der Fig. 6 kombinieren. So kann er einen piezoelektrischen Drucksensor realisieren, bei dem alle bei der Ableitung der Signale direkt beteiligten Bestandteile des piezoelektrischen Drucksensors über Stoffschluss miteinander verbunden sind. Auch kann er einen piezoelektrischen Drucksensor realisieren, bei dem alle mechanischen Verbindungen zwischen seinen Bestandteilen stoffschlüssige Verbindungen sind. Auch kann er einen piezoelektrischen Drucksensor realisieren, bei dem die Ladungsableitung direkt stoffschlüssig mit der elektrischen Leiterplatte verbunden ist.

### Bezugszeichenliste

- AA': Vertikalachse
- A÷A': Schnittlinie
- BB': Horizontalachse
- B÷B': Schnittlinie
- CC': Längsachse
- 1: piezoelektrischer Drucksensor
- 2: Sensoranordnung
- 4: Signalkabelanordnung
- 5: Auswerteeinheit
- 20: Sensorgehäuseanordnung
- 20.1: Sensorgehäuse
- 20.2: Versteifungshülse
- 21: Membran
- 22: piezoelektrischer Aufnehmer
- 22.1: erstes Auflageelement
- 22.2: piezoelektrisches Aufnehmerelement
- 22.3: zweites Auflageelement
- 23: Elektrodenanordnung
- 23.1: Ladungsabgriff
- 23.2: Ladungsableitung
- 24: Vorspannanordnung
- 24.1: Vorspannhülse
- 24.2: Vorspannkörper
- 25: erster elektrischer Isolationskörper
- 26: Kompensationselement
- 27: elektrische Durchführungsanordnung
- 27.1: erstes Adapterelement
- 27.2: zweiter elektrischer Isolationskörper
- 27.3: zweites Adapterelement
- 40: Verbindungselementgehäuse
- 40.1: Verbindungselementgehäuseabsatz
- 41: Signalkabel
- 41.1: elektrischer Signalleiter
- 41.2: elektrisches Isolatorelement
- 41.20: zweites Rastierelement
- 41.3: Signalkabelmantel
- 42: Stützkörper
- 42.1: Stützkörperrahmen
- 43: elektrisches Verbindungselement
- 43.00: erstes Rastierelement
- 50: Leiterplattengehäuse
- 51: elektrische Leiterplatte
- 51.1: elektrischer Signalleiter
- 52: Stützkörper
- 53: elektrisches Verbindungselement

## Patentansprüche

1. Piezoelektrischer Drucksensor (1); mit einem Sensorgehäuse (20) in dem eine Membran (21), ein piezoelektrischer Aufnehmer (22), ein Ladungsabgriff (23.1) und eine Vorspannanordnung (24) angeordnet sind; welche Membran (21) einen Druckverlauf erfasst; auf welchem piezoelektrischen Aufnehmer (22) der erfasste Druckverlauf Polarisationsladungen erzeugt; welche Vorspannanordnung (24) einen Vorspannkörper (24.2) und eine Vorspannhülse (24.1) aufweist und den piezoelektrischen Aufnehmer (22) mechanisch vorspannt; welcher Ladungsabgriff (23.1) die Polarisationsladungen abnimmt; und welcher Ladungsabgriff (23.1) durch einen zweiten Spalt von der Vorspannhülse (24.1) elektrisch isoliert ist; der Ladungsabgriff (23.1) auf einer der Membran (21) zugewandten Seite des Vorspannkörpers (24.2) über einen ersten elektrischen Isolationskörper (25) mechanisch mit dem Vorspannkörper (24.2) verbunden ist und den zweiten Spalt druckdicht von einer Umgebung trennt; **dadurch gekennzeichnet, dass** der Ladungsabgriff (23.1) stoffschlüssig mit dem ersten elektrischen Isolationskörper (25) verbunden ist.

2. Piezoelektrischer Drucksensor (1) nach Anspruch 1, **dadurch gekennzeichnet, dass** der Ladungsabgriff (23.1) auf einer von der Membran (21) abgewandten Seite des piezoelektrischen Aufnehmers (22) angeordnet ist.

3. Piezoelektrischer Drucksensor (1) nach einem der Ansprüche 1 oder 2, **dadurch gekennzeichnet, dass** der erste elektrische Isolationskörper (25) auf einer von der Membran (21) abgewandten Seite des Ladungsabgriffs (23.1) angeordnet ist; und dass der erste elektrische Isolationskörper (25) zwischen dem Ladungsabgriff (23.1) und dem Vorspannkörper (24.2) angeordnet ist.

4. Piezoelektrischer Drucksensor (1) nach einem der Ansprüche 1 bis 3, **dadurch gekennzeichnet, dass** ein Kompensationselement (26) des piezoelektrischen Drucksensors (1) auf einer von der Membran (21) abgewandten Seite des ersten Isolationskörpers (25) angeordnet ist; und dass das Kompensationselement (26) zwischen dem ersten Isolationskörper (25) und dem Vorspannkörper (24.2) angeordnet ist.

5. Piezoelektrischer Drucksensor (1) nach Anspruch 4, **dadurch gekennzeichnet, dass** der erste elektrische Isolationskörper (25) stoffschlüssig mit dem Kompensationselement (26) verbunden ist.

6. Piezoelektrischer Drucksensor (1) nach einem der Ansprüche 4 oder 5, **dadurch gekennzeichnet, dass** das Kompensationselement (26) stoffschlüssig mit dem Vorspannkörper (24.2) verbunden ist.

7. Piezoelektrischer Drucksensor (1) nach einem der Ansprüche 1 bis 6, **dadurch gekennzeichnet, dass** der Vorspannkörper (24.2) mechanisch mit einer Sensorgehäuseanordnung (20) des piezoelektrischen Drucksensors (1) verbunden ist.

8. Piezoelektrischer Drucksensor (1) nach Anspruch 7, **dadurch gekennzeichnet, dass** die Sensorgehäuseanordnung (20) ein Sensorgehäuse (20.1) und ein Versteifungsgehäuse (20.2) aufweist; und dass der Vorspannkörper (24.2) stoffschlüssig mit dem Versteifungsgehäuse (20.2) verbunden ist.

9. Piezoelektrischer Drucksensor (1) nach Anspruch 8, **dadurch gekennzeichnet, dass** das Sensorgehäuse (20.1) und das Versteifungsgehäuse (20.2) stoffschlüssig miteinander verbunden sind.

10. Piezoelektrischer Drucksensor (1) nach einem der Ansprüche 7 bis 9, **dadurch gekennzeichnet, dass** der Ladungsabgriff (23.1) direkt oder indirekt nur über mindestens eine stoffschlüssige Verbindung mit der Sensorgehäuseanordnung (20) mechanisch verbunden ist.

11. Piezoelektrischer Drucksensor (1) nach einem der Ansprüche 1 bis 10, **dadurch gekennzeichnet, dass** der piezoelektrische Aufnehmer (22) ein piezoelektrisches Element (22.2) und ein zweites Auflageelement (22.3) aufweist; dass das zweite Auflageelement (22.3) auf einer von der Membran (21) abgewandten Seite des piezoelektrisches Elementes (22.2) angeordnet ist; dass das zweite Auflageelement (22.3) zwischen dem piezoelektrischen Element (22.2) und dem Ladungsabgriff (23.1) angeordnet ist; und dass das zweite Auflageelement (22.3) stoffschlüssig mit dem piezoelektrischen Element (22.2) verbunden ist.

12. Piezoelektrischer Drucksensor (1) nach Anspruch 11, **dadurch gekennzeichnet, dass** das zweite Auflageelement (22.3) stoffschlüssig mit dem Ladungsabgriff (23.1) verbunden ist oder dass das zweite Auflageelement (22.3) einstückig mit dem Ladungsabgriff (23.1) hergestellt ist.

13. Piezoelektrischer Drucksensor (1) nach einem der Ansprüche 1 bis 12, **dadurch gekennzeichnet, dass** der piezoelektrische Aufnehmer (22) ein erstes Auflageelement (22.1) aufweist; dass das erste Auflageelement (22.1) auf einer der Membran (21) zugewandten Seite des piezoelektrisches Elementes (22.2) angeordnet ist; und dass das erste Auflageelement (22.1) stoffschlüssig mit dem piezoelektrischen Element (22.2) verbunden ist.

14. Piezoelektrischer Drucksensor (1) nach Anspruch 13, **dadurch gekennzeichnet, dass** das erste Auflageelement (22.1) stoffschlüssig mit der Vorspannhülse (24.1) verbunden ist.

## Claims

1. A piezoelectric pressure sensor (1) comprising a sensor housing (20) in which is disposed a membrane (21), a piezoelectric transducer (22), a charge pick-up (23.1), and a prestressing assembly (24); wherein said membrane (21) captures a pressure profile; said captured pressure profile generating polarization charges on said piezoelectric transducer (22); wherein said prestressing assembly (24) comprises a prestressing body (24.2) and a prestressing sleeve (24.1) and puts the piezoelectric transducer (22) under a mechanical prestress; the charge pick-up (23.1) picks up the polarization charges; said charge pick-up (23.1) being electrically insulated from the prestressing sleeve (24.1) by a second gap and the charge pick-up (23.1) being mechanically joined to said prestressing body (24.2) on a side of the prestressing body (24.2) that faces the membrane (21) via a first electrical insulation body (25) and sealing-off said second gap from an environment in a pressure-tight manner, **characterized in that** the charge pick-up (23.1) is joined to the first electrical insulation body (25) by material bonding.

2. The piezoelectric pressure sensor (1) according to claim 1, **characterized in that** said charge pick-up (23.1) is arranged on a side of the piezoelectric transducer (22) that faces away from the membrane (21).

3. The piezoelectric pressure sensor (1) according to any the claims 1 or 2, **characterized in that** the first electrical insulation body (25) is arranged on a side of the charge pick-up (23.1) that faces away from the membrane (21); and **in that** the first electrical insulation body (25) is interposed between the charge pick-up (23.1) and the prestressing body (24.2) .

4. The piezoelectric pressure sensor (1) according to any of claims 1 to 3, **characterized in that** a compensation element (26) of said piezoelectric pressure sensor (1) is arranged on a side of the first electrical insulation body (25) that faces away from the membrane (21); and **in that** said compensation element (26) is interposed between the first electrical insulation body (25) and the prestressing body (24.2).

5. The piezoelectric pressure sensor (1) according to claim 4, **characterized in that** the first electrical insulation body (25) is bonded to the compensation element (26) by material bonding.

6. The piezoelectric pressure sensor (1) according to any of claims 4 or 5, **characterized in that** the compensation element (26) is bonded to the prestressing body (24.2) by material bonding.

7. The piezoelectric pressure sensor (1) according to any of claims 1 to 6, **characterized in that** the prestressing body (24.2) is mechanically joined to a sensor housing assembly (20) of the piezoelectric pressure sensor (1).

8. The piezoelectric pressure sensor (1) according to claim 7, **characterized in that** said sensor housing assembly (20) comprises a sensor housing (20.1) and a reinforcement casing (20.2); and **in that** the prestressing body (24.2) is joined to the reinforcement casing (20.2) by material bonding.

9. The piezoelectric pressure sensor (1) according to claim 8, **characterized in that** said sensor housing (20.1) and said reinforcement casing (20.2) are joined to one another by material bonding.

10. The piezoelectric pressure sensor (1) according to any of claims 7 to 9, **characterized in that** the charge pick-up (23.1) is mechanically joined to the sensor housing assembly (20) directly or indirectly only by at least one material-bonding connection.

11. The piezoelectric pressure sensor (1) according to any of claims 1 to 10, **characterized in that** the piezoelectric transducer (22) comprises a piezoelectric element (22.2) and a second supporting element (22.3); said second supporting element (22.3) being disposed on a side of the piezoelectric element (22.2) that faces away from the membrane (21); said second supporting element (22.3) being disposed between the piezoelectric element (22.2) and said charge pick-up (23.1); and the piezoelectric element (22.2) being joined to the piezoelectric element (22.2) by material bonding.

12. The piezoelectric pressure sensor (1) according to claim 11, **characterized in that** the second supporting element (22.3) is joined to the charge pick-up (23.1) by material bonding or said second supporting element (22.3) is made as one piece with said charge pick-up (23.1).

13. The piezoelectric pressure sensor (1) according to any of claims 1 to 12, **characterized in that** the piezoelectric transducer (22) comprises a first supporting element (22.1); said first supporting element (22.1) being disposed on a side of the piezoelectric element (22.2) that faces the membrane (21); and said first supporting element (22.1) being joined to the piezoelectric element (22.2) by material bonding.

14. The piezoelectric pressure sensor (1) according to claim 13, **characterized in that** the first supporting element (22.1) is joined to the prestressing sleeve (24.1) by material bonding.

## Revendications

1. Capteur de pression piézoélectrique (1) comprenant un boîtier du capteur (20) dans lequel sont disposés une membrane (21), un transducteur piézoélectrique (22), un dispositif de prélèvement des charges (23.1) et un dispositif de précontrainte (24); dans lequel ladite membrane (21) détecte un profil de pression; ledit profil de pression détecté produit des charges électriques polarisées sur le transducteur piézoélectrique (22); ledit dispositif de précontrainte (24) comprenant un corps de précontrainte (24.2) et une douille de précontrainte (24.1) et mettant ledit transducteur piézoélectrique (22) sous une précontrainte mécanique; dans lequel le dispositif de prélèvement des charges (23.1) prélève les charges électriques polarisées; ledit dispositif de prélèvement des charges (23.1) étant isolé électriquement de la douille de précontrainte (24.1) par un deuxième espacement et ledit dispositif de prélèvement des charges (23.1) étant relié mécaniquement par un premier corps d'isolation électrique (25) audit corps de précontrainte (24.2) sur un côté du corps de précontrainte (24.2) faisant face à la membrane (21) et étanchant ledit deuxième espacement d'un environnement de façon étanche sous pression, **caractérisé en ce que** ledit dispositif de prélèvement des charges (23.1) est relié au premier corps d'isolation électrique (25) par liaison de matière.

2. Capteur de pression piézoélectrique (1) selon la revendication 1, **caractérisé en ce que** ledit dispositif de prélèvement des charges (23.1) est disposé sur un côté du transducteur piézoélectrique (22) opposé à la membrane (21).

3. Capteur de pression piézoélectrique (1) selon l'une quelconque des revendications 1 ou 2, **caractérisé en ce que** ledit premier corps d'isolation électrique (25) est disposé sur un côté du dispositif de prélèvement des charges (23.1) opposé à la membrane (21); et **en ce que** le premier corps d'isolation électrique (25) est disposé entre ledit dispositif de prélèvement des charges (23.1) et ledit corps de précontrainte (24.2).

4. Capteur de pression piézoélectrique (1) selon l'une quelconque des revendications 1 à 3, **caractérisé en ce qu**'un élément de compensation (26) dudit capteur de pression piézoélectrique (1) est disposé sur un côté du premier corps d'isolation électrique (25) opposé à la membrane (21); et en ce que ledit élément de compensation (26) est disposé entre le premier corps d'isolation électrique (25) et le corps de précontrainte (24.2).

5. Capteur de pression piézoélectrique (1) selon la revendication 4, **caractérisé en ce que** le premier corps d'isolation électrique (25) est lié à l'élément de compensation (26) par liaison de matière.

6. Capteur de pression piézoélectrique (1) selon l'une quelconque des revendications 4 ou 5, **caractérisé en ce que** l'élément de compensation (26) est lié au corps de précontrainte (24.2) par liaison de matière.

7. Capteur de pression piézoélectrique (1) selon l'une quelconque des revendications 1 à 6, **caractérisé en ce que** le corps de précontrainte (24.2) est relié mécaniquement à un ensemble de boîtier du capteur (20) du capteur de pression piézoélectrique (1).

8. Capteur de pression piézoélectrique (1) selon la revendication 7, **caractérisé en ce que** ledit ensemble de boîtier du capteur (20) comprend un boîtier du capteur (20.1) et un boîtier de renforcement (20.2); et **en ce que** le corps de précontrainte (24.2) est relié au boîtier de renforcement (20.2) par liaison de matière.

9. Capteur de pression piézoélectrique (1) selon la revendication 8, **caractérisé en ce que** ledit boîtier du capteur (20.1) et ledit boîtier de renforcement (20.2) étant liés l'un à l'autre par liaison de matière.

10. Capteur de pression piézoélectrique (1) selon l'une quelconque des revendications 7 à 9, **caractérisé en ce que** le dispositif de prélèvement des charges (23.1) est relié mécaniquement à l'ensemble de boîtier du capteur (20) directement ou indirectement seulement par au moins une liaison par adhérence de matière.

11. Capteur de pression piézoélectrique (1) selon l'une quelconque des revendications 1 à 10, **caractérisé en ce que** le transducteur piézoélectrique (22) comprend un élément piézoélectrique (22.2) et un deuxième élément d'appui (22.3); ledit deuxième élément d'appui (22.3) étant disposé sur un côté du élément piézoélectrique (22.2) opposé à la membrane (21); ledit deuxième élément d'appui (22.3) étant disposé entre l'élément piézoélectrique (22.2) et ledit dispositif de prélèvement des charges (23.1); et l'élément piézoélectrique (22.2) étant lié à l'élément piézoélectrique (22.2) par liaison de matière.

12. Capteur de pression piézoélectrique (1) selon la revendication 11, **caractérisé en ce que** ledit deuxième élément d'appui (22.3) est lié au dispositif de prélèvement des charges (23.1) par liaison de matière ou ledit deuxième élément d'appui (22.3) est formé d'un seul tenant avec ledit dispositif de prélèvement des charges (23.1).

13. Capteur de pression piézoélectrique (1) selon l'une quelconque des revendications 1 à 12, **caractérisé en ce que** le transducteur piézoélectrique (22) comprend un premier élément d'appui (22.1); ledit premier élément d'appui (22.1) étant disposé sur un côté du élément piézoélectrique (22.2) faisant face à la membrane (21); et ledit premier élément d'appui (22.1) étant lié à l'élément piézoélectrique (22.2) par liaison de matière.

14. Capteur de pression piézoélectrique (1) selon la revendication 13, **caractérisé en ce que** le premier élément d'appui (22.1) est lié à la douille de précontrainte (24.1) par liaison de matière.
